# EUROPEAN PATENT APPLICATION

(11) **EP 2 642 657 A2**
(43) Date of publication of application: **25.09.2013**
(21) Application number: 12187723.7
(22) Date of filing: 09.10.2012
(51) Int. Cl.: H02M 7/797

(54) **AC-DC converter and charge and discharge system thereof**

(30) Priority: 23.03.2012 TW 101110182; 29.06.2012 TW 101123517
(71) Applicant: Lite-On Clean Energy Technology Corp., 11494 Taipei City (TW)
(72) Inventor: HSU, Wen-Chin, 11494 Taipei City (TW)
(74) Representative: Altenburg, Bernardus Stephanus Franciscus

(57) **Abstract**

An AC-DC converter and a charge and discharge system thereof are disclosed. The AC-DC converter includes a first signal terminal, an AC signal conversion circuit, a power storage component, a first conversion circuit, a controlling module, a second conversion circuit, and a second signal terminal. The first signal terminal is used for inputting a first power signal. The AC signal conversion circuit is used for converting the first power signal into a first conversion signal. The power storage component is used for amplifying a potential of the first conversion signal. The controlling module controls the first conversion circuit to transfer the first conversion signal into a second conversion signal after the potential of the first conversion signal is amplified. The second conversion circuit is used for converting the second conversion signal into a DC power signal. The second signal terminal is used for outputting the DC power signal.

## Description

### BACKGROUND OF THE INVENTION

### 1. Field of the Invention

The present invention is related to an AC-DC converter and to a charging and discharging system thereof; more particularly, it is related to an AC-DC converter and a charging and discharging system thereof that can amplify the potential of a power signal.

### 2. Description of the Related Art

In today's technology, electrical power is a critical element that cannot be ignored. Various technologies for converting AC (alternating current) signals and DC (direct current) signals have been developed. Bidirectional AC-DC conversion circuits are used in various charging and discharging systems. However, in the conventional art, normal bidirectional AC-DC conversion circuits are composed of multiple conversion circuits connected electrically for converting AC power signals and DC power signals into each other. These conversion circuits are constructed of multiple switch units that are electrically connected as a bridge circuit, and they do not adjust the potential of power signals. For example, when a bidirectional conversion circuit converts an AC power signal with a low potential into a DC power signal, it can only be converted into a DC power signal with a low potential. If it is used for charging a battery unit, a longer charging time is therefore necessary. If a DC power signal with a larger potential is needed to be output, a large transformer is used for conversion, but the much greater weight of a large transformer makes using such a device inconvenient. For uninterruptible power supply systems or electrical cars that a need larger power storage capacity, the conversion efficiency of conventional AC-DC converters is inefficient.

Therefore, there is a need for a new AC-DC converter and a charging and discharging system with an AC-DC converter that can solve the problems of the prior art.

### SUMMARY OF THE INVENTION

A major objective of the present invention is to provide an AC-DC converter that is able to amplify a potential of a power signal.

Another major objective of the present invention is to provide a charging and discharging system with the abovementioned AC-DC converter.

To achieve the above objectives, the AC-DC converter of the present invention includes a first signal terminal, a power storage unit, a first conversion circuit, a control module, a second conversion circuit, and a second signal terminal. The first signal terminal is used for inputting a first power signal. The power storage unit is electrically connected to the first signal terminal for increasing a potential of the first power signal and transforming the first power signal into a first conversion signal. The first conversion circuit is electrically connected to the power storage unit. The control module is electrically connected to the first conversion circuit. The control module controls the first conversion circuit to use the power storage unit for amplifying the first power signal into the first conversion signal and then transferring it into a second conversion signal. The second conversion circuit is electrically connected to the first conversion circuit via a transformer for converting the second conversion signal into a DC power signal. The second signal terminal is electrically connected to the second conversion circuit for outputting a DC power signal.

The charging and discharging system includes an AC-DC converter and a battery apparatus. The AC-DC converter includes a first signal terminal, a power storage unit, a first conversion circuit, a control module, a second conversion circuit, and a second signal terminal. The first signal terminal is used for inputting a first power signal. The power storage unit is electrically connected to the first conversion circuit for amplifying the potential of the first power signal and converting it into a first conversion signal. The first conversion circuit is electrically connected to the power storage unit. The control module is electrically connected to the first conversion circuit. The control module controls the first conversion circuit to use the power storage unit for amplifying the first power signal into the first conversion signal and then transferring it into a second conversion signal. The second conversion circuit is electrically connected to the first conversion circuit for converting the second conversion signal into a DC power signal. The second signal terminal is electrically connected to the second conversion circuit for outputting a DC power signal. The battery apparatus is electrically connected to the second signal terminal for receiving the DC power signal.

### BRIEF DESCRIPTION OF THE DRAWINGS

Fig. 1A is a structure diagram illustrating a charging and discharging system with an AC-DC converter of the present invention.
Fig. 1B is a structure diagram illustrating the AC-DC converter with an AC signal conversion circuit of the present invention.
Fig. 2A is a circuit structure diagram of an AC signal conversion circuit of the AC-DC converter of the first embodiment of the present invention.
Fig. 2B is a circuit structure diagram of an AC signal conversion circuit of the AC-DC converter of the second embodiment of the present invention.
Fig. 3A is a circuit structure diagram of a first conversion circuit of the AC-DC converter of the third embodiment of the present invention.
Fig. 3B is a circuit structure diagram of a first conversion circuit of the AC-DC converter of the fourth embodiment of the present invention.
Fig. 3C is a circuit structure diagram of a first conversion circuit of the AC-DC converter of the fifth embodiment of the present invention.
Fig. 3D is a circuit structure diagram of a first conversion circuit of the AC-DC converter of the sixth embodiment of the present invention.
Fig. 4A is a circuit structure diagram of a second conversion circuit of the AC-DC converter of the seventh embodiment of the present invention.
Fig. 4B is a circuit structure diagram of a second conversion circuit of the AC-DC converter of the eighth embodiment of the present invention.
Fig. 4C is a circuit structure diagram of a second conversion circuit of the AC-DC converter of the ninth embodiment of the present invention.

### DETAILED DESCRIPTION OF THE PREFERRED EMBODIMENTS

These and other objects and advantages of the present invention will become apparent from the following description of the accompanying drawings, which disclose several embodiments of the present invention. It is to be understood that the drawings are to be used for purposes of illustration only, and not as a definition of the invention.

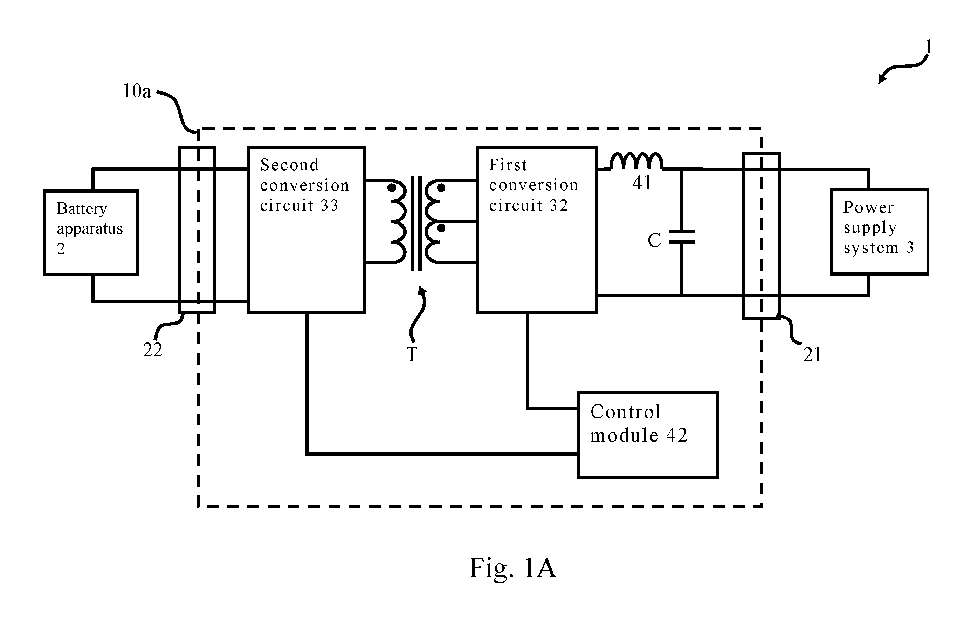

Please refer to Fig. 1A, which is a structure diagram illustrating a charging and discharging system with an AC-DC converter of the present invention.

The charging and discharging system 1 of the present invention can be used in systems with two directional power signal transmission, such as an electrical car or an uninterruptible power supply system, but the present invention is not limited to only such applications. The charging and discharging system 1 comprises a battery apparatus 2 and an AC-DC converter 10a. The AC-DC converter 10a is a two directional AC-DC power signal conversion module in which the second signal terminal 22 is electrically connected to an external electronic device, such as the battery apparatus 2, for outputting a DC power signal to the battery apparatus 2 or receiving a DC power signal from the battery apparatus 2.

The AC-DC converter 10a comprises a first signal terminal 21, a second signal terminal 22, a first conversion circuit 32, a second conversion circuit 33, a power storage unit 41, a control module 42, a transformer T, and other electrical units. The first signal terminal 21 of the AC-DC converter 10a is electrically connected to the power supply system 3 for receiving a first power signal. The power supply system 3 is able to be a system for supplying a DC power, but the present invention is not limited to only the examples mentioned above. The power supply system 3 may also be a system for supplying a DC power. As shown in the Fig. 1A, it is only explained here that the power supply system 3 is a related system for supplying the DC power and that the first power signal is the DC signal in the following disclosure.

The first conversion circuit 32 is electrically connected to the first signal terminal 21. Moreover, the power storage unit 41 may also be connected between the first conversion circuit 32 and first signal terminal 21. The power storage unit 41 may be an inductor for amplifying a potential of the first power signal to convert it into a first conversion signal, wherein the first conversion circuit 32 and the power storage unit 41 may both have a power factor correction (PFC) function. Then the first conversion circuit 32 is used for receiving the first conversion signal and transferring the first conversion signal, which has an amplified potential, into a second conversion signal. Then the second conversion signal is transmitted to the second conversion circuit 33 via the transformer T.

The first conversion circuit 32 is also used for electrically connecting to the control module 42 so that the generation of the second conversion signal is controlled by the control module 42. The control module 42 may be implemented with circuit or chip hardware architecture, hardware combined with firmware structure, or other structures, but the present invention is not limited to such designs. The control module 42 is used for controlling the first conversion circuit 32 to allow the power storage unit 41 first to amplify the potential of the first conversion signal and then to control the first conversion circuit 32 to transfer the amplified first conversion signal into the second conversion signal. How the control module 42 controls the first conversion circuit 32 will be explained in greater detail later and thus is not described here. As such, the AC-DC converter 10a is capable of amplifying the potential of the input signal from the first signal terminal 21 by switching of the first conversion circuit 32 and storing a greater amount of energy for charging the battery apparatus 2.

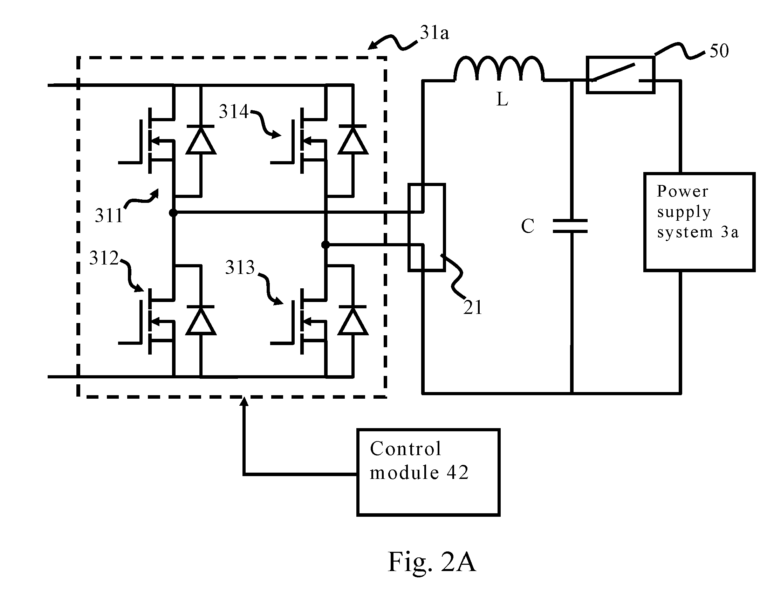

The second conversion circuit 33 is electrically connected to the first conversion circuit 32 via the transformer T for receiving the second conversion signal and then converting it into the DC power signal. Finally, the DC power signal flows through the second signal terminal 22 to the battery apparatus 2 for charging the battery apparatus 2. Please note that the second conversion circuit 33 may also be electrically connected to the control module 42 and be controlled by the control module 42 for performing signal conversion, but the present invention is not limited to such a design. In addition, passive elements like a capacitor C or an inductor L (as illustrated in Fig. 2A) may be disposed inside the AC-DC converter for stabilizing potential. Since how the capacitor C operates and functions is well known to person of ordinary skill in the art, it is not further explained here.

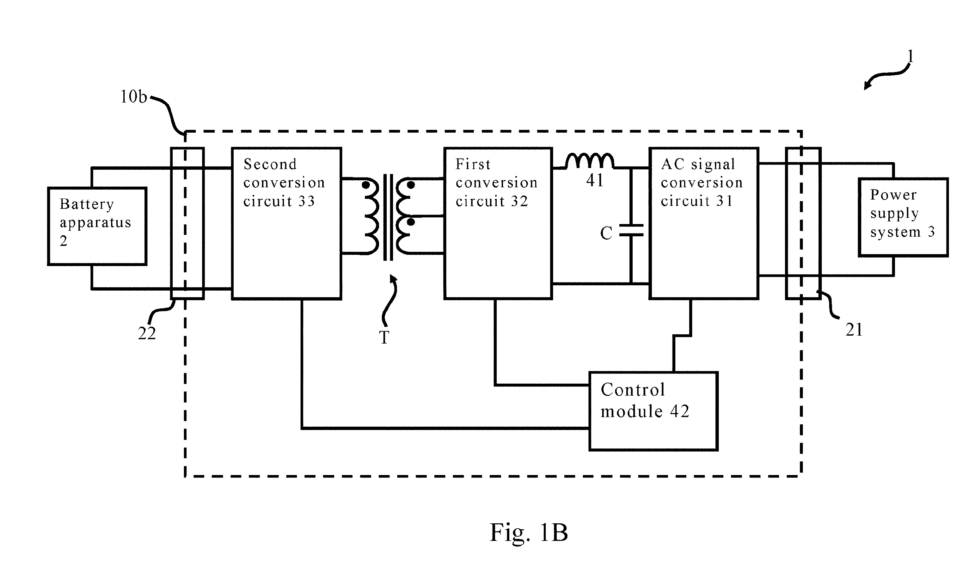

Next please refer to Fig. 1B, which is a structure diagram illustrating the AC-DC converter with an AC signal conversion circuit of the present invention

If the power supply system 3 is a system for supplying mains electricity or an electrical generator for supplying the AC power signal, the power supply system 3 is able to supply the first power signal in the AC signal. In this embodiment, the AC-DC converter 10b further comprises an AC signal conversion circuit 31. The AC signal conversion circuit 31 is electrically connected between the first signal terminal 21 and the power storage unit 41 and used for receiving the AC signal of the first power signal to be converted into a DC signal and to be transmitted to the power storage unit 41. Similarly, the AC signal conversion circuit 31 can be controlled by the control module 42 for performing signal conversion. Because the usage of the other elements in the AC-DC converter 10b, such as the first conversion circuit 32 or the second conversion circuit 33, are the same as described in Fig. 1A, no further description is provided here.

The AC-DC converter 10b can also transfer a DC power signal into a first power signal in the opposite direction. That is, after the battery apparatus 2 inputs a DC power signal, the control module 42 controls the second conversion circuit 33, the first conversion circuit 32, and the AC signal conversion circuit 31 to perform conversion, and then the first power signal obtained from conversion is transmitted to a load (not shown in the drawing) via the first signal terminal 21. Next, please refer to Fig. 2A, which is a circuit diagram of the AC signal conversion circuit of the AC-DC converter of the first embodiment of the present invention. Please note that, because the flow for the circuit structure of the AC-DC converter 10a for transferring a DC signal to an AC signal is similar to that for converting an AC signal to a DC signal, and persons of ordinary skill in the art understand the conversion structure and processes for both directions of conversion, the following disclosure explains only how an AC signal is converted to a DC signal.

In the first embodiment of the present invention, the AC signal conversion circuit 31a comprises a first switch unit 311, a second switch unit 312, a third switch unit 313, and a fourth switch unit 314, and they all may be implemented by using a transistor with a diode, wherein the transistor may be a metal-oxide-semiconductor field-effect transistor (MOSFET) or an insulated gate bipolar transistor (IGBT). However, the present invention is not limited to such arrangement. For example, they can be implemented with diode devices. As shown in Fig. 2A, the first switch unit 311, the second switch unit 312, the third switch unit 313, and the fourth switch unit 314 form a bridge circuit, but the AC signal conversion circuit 31a may also be a half bridge circuit. Therefore, when a first power signal generated by the power supply system 3a is input, it flows through each switch unit of the AC signal conversion circuit 31a respectively for converting the first power signal to be rectified into a first conversion signal. On the other hand, the AC signal conversion circuit 31a may also be controlled by the control module 42 to perform signal conversion. The control module 42 first controls the first switch unit 311 and the third switch unit 313 to be turned on, and the second switch unit 312 and the fourth switch unit 314 to be turned off, and then controls the second switch unit 312 and the fourth switch unit 314 to be turned on and the third switch unit 313 and the first switch unit 311 to be turned off. With such a process, the first conversion signal is generated via switching. In this embodiment, the AC signal conversion circuit 31a may be controlled by the control module 42 to achieve better conversion efficiency, but the present invention is not limited to a design that requires a control module 42.

Please also note that the charging and discharging system 1 may further include a switch module 50 when it is used in different applications. For example, when the charging and discharging system 1 is an uninterruptible power supply system, the first signal terminal 21 can be electrically connected to the switch module 50 so as to determine whether to receive a first power signal from the power supply system 3a or to output a first power signal to other loads with the switch module 50. The switch module 50 can be a single-way switch connected to one output terminal of the power supply system 3a or can be a double-way switch connected to two terminals of the power supply system 3a at the same time. However, the present invention is not limited to such designs.

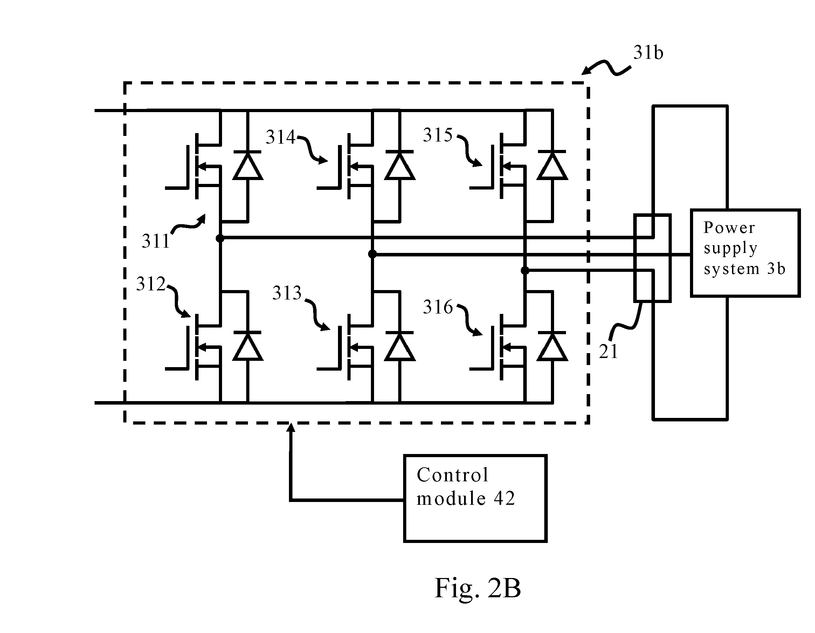

The AC signal conversion circuit 31a, as shown in Fig. 2A, is used for converting a single phase AC signal. But the present invention is not limited to such a design. Next, please refer to Fig. 2B, which is a circuit structure diagram of an AC signal conversion circuit of the AC-DC converter of the second embodiment of the present invention.

In the second embodiment of the present invention, the power supply system 3b is used for supplying a three-phase AC signal. The AC signal conversion circuit 31b comprises a first switch unit 311, a second switch unit 312, a third switch unit 313, a fourth switch unit 314, a fifth switch unit 315, and a sixth switch unit 316, and they all may be implemented by using a transistor with a diode, wherein the transistor may be a MOSFET or an IGBT. As a result, when the power supply system 3b supplies the three phase AC signal, the AC signal conversion circuit 31b controls the first switch unit 311, the second switch unit 312, the third switch unit 313, the fourth switch unit 314, the fifth switch unit 315, and the sixth switch unit 316 to turned on or turned off for generating the DC signal.

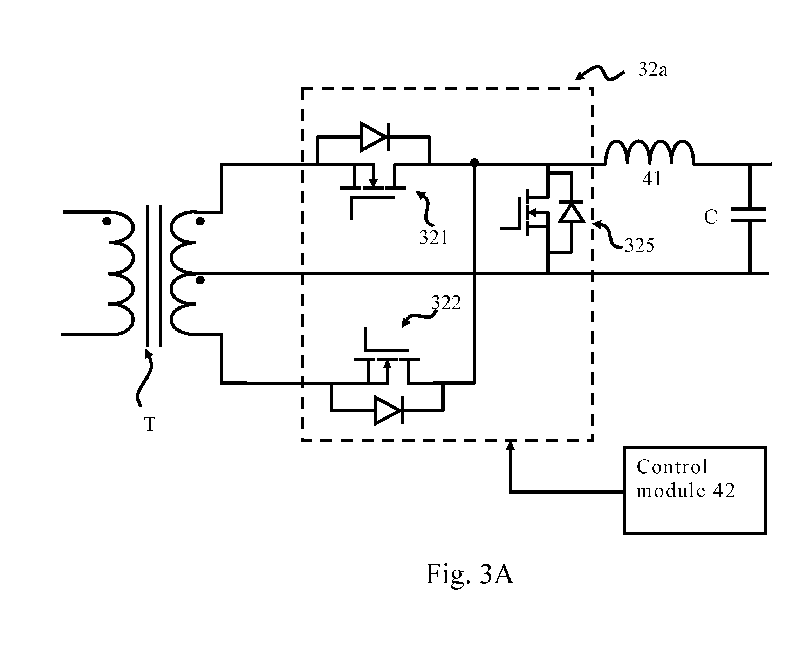

Next, please refer to Fig. 3A, which illustrates a circuit structure of the first conversion circuit of the AC-DC converter of the third embodiment of the present invention.

In the third embodiment of the present invention, the first conversion circuit 32a comprises a synchronous rectifier and an auxiliary switch unit 325. The synchronous rectifier comprises a first switch unit 321 and a second switch unit 322 with different terminals electrically connected to the auxiliary switch unit 325. The auxiliary switch 325, the first switch unit 321, and the second switch unit 322 are respectively implemented by using a transistor with a diode, such as a metal-oxide-semiconductor field-effect transistor (MOSFET) or an insulated gate bipolar transistor (IGBT) with a diode, and they are all electrically connected to the control module 42. When the first conversion signal is received, the control module 42 first controls the auxiliary switch unit 325 to be turned on. With such a status of the auxiliary switch unit 325, the first conversion signal flows through the capacitor C, the power storage unit 41, the auxiliary switch 325, and then back to the capacitor C so that the first conversion signal is amplified and more energy is stored in the power storage unit 41. Next, the control module 42 controls the auxiliary switch unit 325 to be turned off, and the first switch unit 321 to be turned on, so as to output the second conversion signal with a positive waveform. Then the control module 42 further executes a similar control flow for controlling the switch unit 325 to be turned on first, and then controls the auxiliary switch unit 325 to be turned off and the second switch unit 322 to be turned on so as to generate the second conversion signal with an opposite waveform.

It can be understood from the above disclosure that the first conversion circuit 32a may use the power storage unit 41 to amplify the first conversion signal and then may output the second conversion signal to get a signal of greater energy.

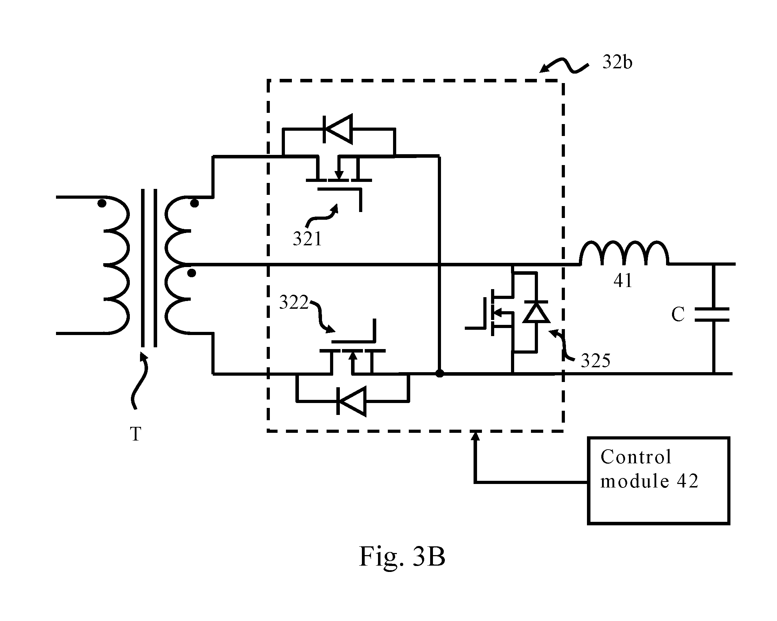

Next please refer to Fig. 3B, which illustrates a circuit structure diagram of a first conversion circuit of an AC-DC converter of a fourth embodiment of the present invention.

In the fourth embodiment of the present invention, the first conversion circuit 32b is similar to the first conversion circuit 32a of the third embodiment, for both conversion circuits have a synchronous rectifier and the auxiliary switch unit 325. The only differences are the direction of the electrical connection between the first switch unit 321 and the auxiliary switch unit 325 and the direction of the electrical connection between the second switch unit 322 and the auxiliary switch unit 325. The first conversion circuit 32b operates under a similar principle to the first conversion circuit 32a of the third embodiment. Therefore, in the fourth embodiment, the control module 42 first controls the auxiliary switch unit 325 to be turned on, and then controls the auxiliary switch unit 325 to be turned off and the second switch unit 322 to be turned on for outputting a second conversion signal with a positive waveform. Then the control module 42 controls the auxiliary switch unit 325 to be turned on, and then controls the auxiliary switch unit 325 to be turned off and the first switch unit 321 to be turned on for outputting a second conversion signal with an opposite waveform. With such a process, the first conversion circuit 32b is able to output the second conversion signal.

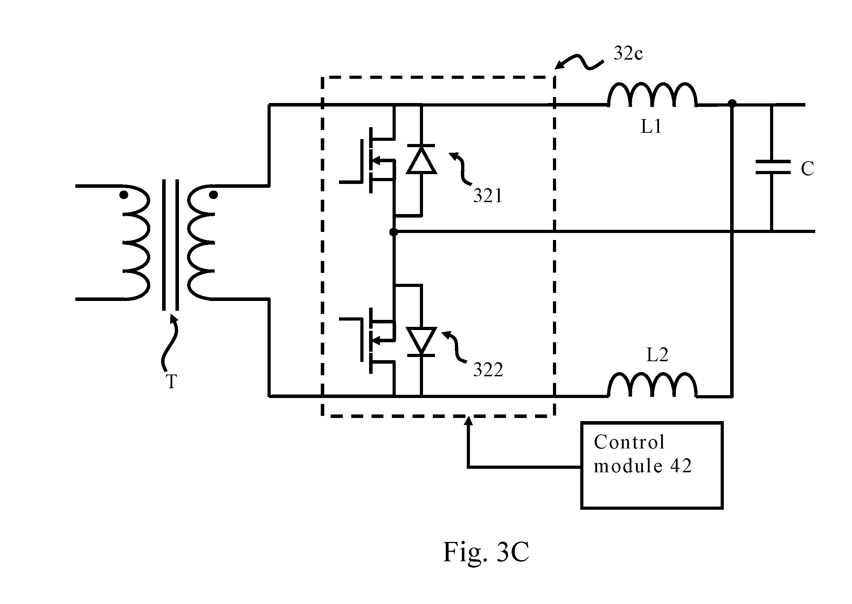

Next, please refer to Fig. 3C, which is a circuit structure diagram of the first conversion circuit of the AC-DC converter of a fifth embodiment of the present invention.

In the fifth embodiment of the present invention, the first conversion circuit 32c is a synchronous current double rectifier. The first conversion circuit 32c has a first switch unit 321 and a second switch unit 322, which respectively are similarly made of a metal oxide semiconductor field-effect transistor with a diode, such as a MOSFET or an IGBT with a diode. They are both electrically connected to the control module 42. In the fifth embodiment, the power storage unit (not shown) includes a first inductor L1 and a second inductor L2. The first inductor L1 is electrically connected to a first switch unit 321 and the second inductor L2 is electrically connected to a second switch unit 322.

When the first conversion signal is received, the control module 42 first controls the first switch unit 321 to be turned on. As such, the first conversion signal flows through the capacitor C, the first inductor L1, and the first switch unit 321, and then flows back to the capacitor C. Therefore, the first conversion signal is amplified and stored as energy by the power storage unit (not shown). Next, the control module 42 controls the first switch unit 321 to be turned off and the second switch unit 322 to be turned on for outputting a second conversion signal with a positive waveform. Next, the control module 42 executes a similar control flow for controlling the second switch unit 322 to be turned on first so that the first conversion signal flows through the capacitor C, the second inductor L2, and the second switch unit 322, and then flows back to the capacitor C. Finally, the second switch unit 322 is controlled to be turned off and the first switch unit 321 is controlled to be turned on so as to output a second conversion signal with an opposite waveform. As a result, the first conversion circuit 32c is capable of storing the energy of the first conversion signal by using the first inductor L1 and the second inductor L2 respectively for outputting the second conversion signal with greater energy.

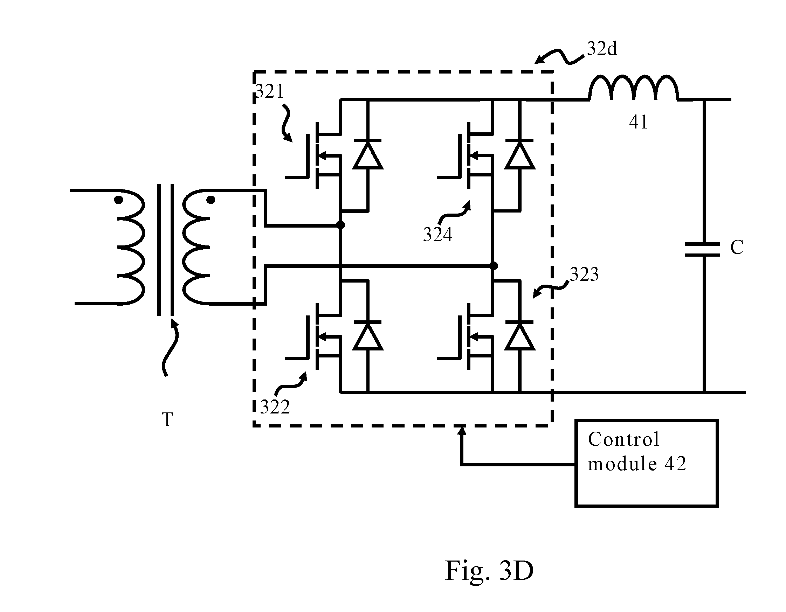

Next, please refer to Fig. 3D, which illustrates a circuit structure diagram of a first conversion circuit of an AC-DC converter of a sixth embodiment of the present invention.

In the sixth embodiment of the present invention, the first conversion circuit 32d is a full wave bridge rectifier that has a first switch unit 321, a second switch unit 322, a third switch unit 323, and a fourth switch unit 324 electrically connected to form a bridge circuit. These switch units are similarly composed of a metal oxide semiconductor field-effect transistor with a diode, such as a MOSFET or an IBGT with a diode. They are all electrically connected to the control module 42.

When the first conversion signal is received, the control module 42 first controls the first switch unit 321 and the second switch unit 322 to be turned on. As such, the first conversion signal flows through the capacitor C, the power storage unit 41, the first switch unit 321, and the second switch unit 322, and then flows back to the capacitor C. Therefore, the first conversion signal is amplified by the power storage unit 41. Next, the control module 42 controls the first switch unit 321 and the third switch unit 323 to be turned on and the second switch unit to be turned off for generating a second conversion signal with a positive waveform. Next, the control module 42 executes a similar control flow by first controlling the fourth switch unit 324 and the third switch unit 323 to be turned on so that the first conversion signal flows through the capacitor C, the power storage unit 41, the fourth switch unit 324, and the third switch unit 323, and then flows back to the capacitor C. Finally, the third switch unit 323 is turned off, and the second switch unit 322 and the fourth switch unit 324 are turned on for outputting a second conversion signal with an opposite waveform. With such a process, the first conversion circuit 32d can use the power storage unit 41 to store energy of the first conversion signal and then output the second conversion signal for obtaining a signal of greater energy.

The charging and discharging system 1 may be configured to set different circuits of the first conversion circuit 32 under different situations. For example, when the charging and discharging system 1 is used in a low power environment, the first conversion circuit 32a or the first conversion circuit 32b is used. When the charging and discharging system 1 is used in a medium power environment, the first conversion circuit 32c is used. When the charging and discharging system 1 is used in a high power environment, the first conversion circuit 32d is used.

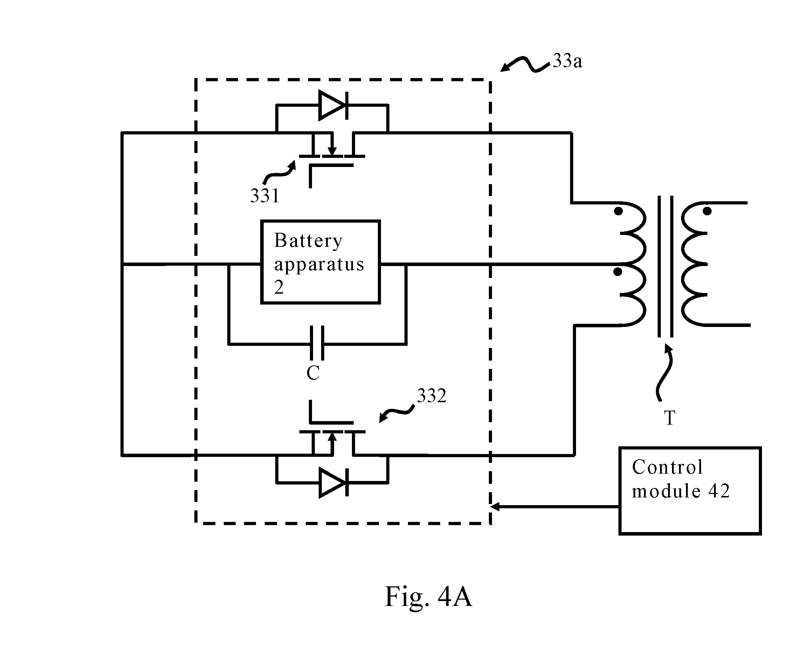

The second conversion circuit 33 of the present invention may also be implemented in different ways. Next, please refer to Fig. 4A, which is a circuit structure diagram of the second conversion circuit of the seventh embodiment of the present invention.

In the seventh embodiment of the present invention, the second conversion circuit 33a has a first switch unit 331 and a second switch unit 332. The first switch unit 331 and the second switch unit 332 are structured as a push-pull circuit and electrically connected to the battery apparatus 2 and the transformer T. The first switch unit 331 and the second switch unit 332 are also constructed of a metal oxide semiconductor filed-effect transistor with a diode, such as a MOSFET or an IBGT with a diode, and they both all electrically connected to the control module 42. However, such arrangement should not be regarded as a limitation of the present invention. When the second conversion signal is input to the second conversion circuit 33a, the control module 42 controls the first switch unit 331 and the second switch unit 332 to be turned on or turned off so as to convert the second conversion signal into a DC power signal for charging the battery apparatus 2. The second conversion circuit 33a may be controlled by the control module 42 for achieving better conversion efficiency. However, when the second conversion signal is input, the second conversion circuit 33a may also perform conversion with its own circuit, and the present invention is not limited to the use of a control module 42 to control the second conversion circuit 33a.

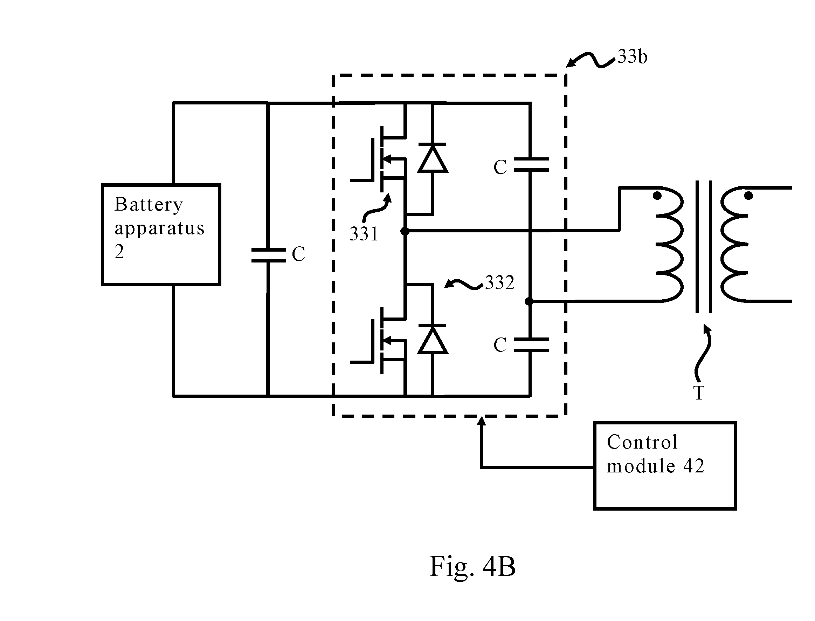

Next, please refer to Fig. 4B, which is a circuit structure diagram of the second conversion circuit of the eighth embodiment of the present invention.

In the eighth embodiment of the present invention, the second conversion circuit 33b has a first switch unit 331 and a second switch unit 332 to form a half bridge circuit. The first switch unit 331 and the second switch unit 332 may be structured of a metal oxide semiconductor filed-effect transistor with a diode, such as a MOSFET or an IGBT with a diode, and they are both electrically connected to the control module 42. However, the present invention is not limited to such a design. Similar to the second conversion circuit 33a, when the second conversion signal is input to the second conversion circuit 33b, the control module 42 controls the first switch unit 331 and the second switch unit 332 to be turned on or to be turned off in order to convert the second conversion signal into a DC power signal for charging the battery apparatus 2. Similarly, the second conversion circuit 33b may also convert the second conversion signal into a DC power signal with its own circuit structure. Although the second conversion circuit 33b may be controlled by the control module 42 to achieve better conversion efficiency, the present invention is not limited to the second conversion circuit 33b being controlled by the control module 42.

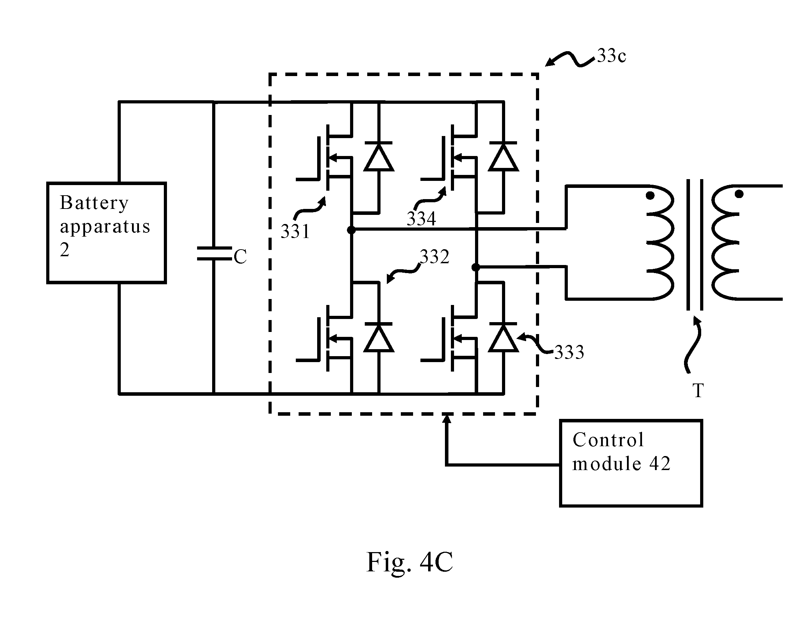

Last, please refer to Fig. 4C, which is a circuit structure diagram of the second conversion circuit of the AC-DC converter of the ninth embodiment of the present invention.

In the ninth embodiment of the present invention, the second conversion circuit 33c has a first switch unit 331, a second switch unit 332, a third switch unit 333, and a fourth switch unit 334 electrically connected to form a full bridge circuit. These switch units are also respectively made of a metal oxide semiconductor filed-effect transistor with a diode, such as a MOSFET or an IGBT with a diode, and they are all electrically connected to the control module 42. Therefore, the control module 42 may first control the first switch unit 331 and the third switch unit 333 to be turned on, and the second switch unit 332 and the fourth switch unit 334 to be turned off. Then the fourth switch unit 334 and the second switch unit 332 are turned on and the third switch unit 333 and the first switch unit 331 are turned off for converting the second conversion signal into a DC power signal for charging the battery apparatus 2. With such a process, better conversion efficiency is obtained. Similarly, the second conversion circuit 33c may use its own circuit structure for converting the second conversion signal into a DC power signal, and the present invention is not limited to the use of the control module 42 for controlling the second conversion circuit 33c.

Therefore, an AC-DC converter 10a or 10b may be implemented by various combinations of the abovementioned embodiments. For example, the AC signal conversion circuit 31 is capable of connecting to any one of the first conversion circuits 32a to 32d and then connecting to any one of the second conversion circuits 33a to 33c for converting the input first power signal into a DC power signal. Moreover, the AC-DC converter 10a or 10b can increase the energy of the signal in order to reduce the charging time of the battery apparatus 2.

It is noted that the above-mentioned embodiments are only for illustration. It is intended that the present invention cover modifications and variations of the present invention provided they fall within the scope of the following claims and their equivalents. Therefore, it will be apparent to those skilled in the art that various modifications and variations can be made to the structure of the present invention without departing from the scope or spirit of the invention.

## Claims

1. An AC-DC converter, comprising:
a first signal terminal for inputting a first power signal;
a power storage unit electrically connected to the first signal terminal for amplifying a potential of the first power signal into a first conversion signal;
a first conversion circuit electrically connected to the power storage unit;
a control module electrically connected to the first conversion circuit, wherein the control module controls the first conversion circuit to use the power storage unit for amplifying the potential of the first power signal into the first conversion signal and then transfers it into a second conversion signal;
a second conversion circuit electrically connected to the first conversion circuit via a transformer for converting the second conversion signal into a DC power signal; and
a second signal terminal electrically connected to the second conversion circuit for outputting the DC power signal.

2. The AC-DC converter as claimed in claim 1, further comprising an AC signal conversion circuit electrically connected between the first signal terminal and the power storage unit, wherein the first power signal is an AC signal, and the AC signal conversion circuit is used for converting the AC signal into a DC signal.

3. The AC-DC converter as claimed in claim 1 or 2, wherein the first power signal is a single phase AC signal or a three-phase AC signal.

4. The AC-DC converter as claimed in claim 1, 2, 3 or 4, wherein the second signal terminal is further used for inputting the DC power signal, and the control module is further used to control the second conversion circuit and the first conversion circuit for converting the DC power signal into the first power signal so as to be output from the first signal terminal.

5. The AC-DC converter as claimed in claims 1 to 4, wherein the first signal terminal is further electrically connected to a switch module.

6. The AC-DC converter as claimed in claim 1 or any of the claims 2 to 5, wherein the first conversion circuit comprises:
a synchronous rectifier having a first switch unit and a second switch unit; and
an auxiliary switch unit respectively electrically connected to the first switch unit and the second switch unit, wherein the control module first controls the auxiliary switch to be turned on for amplifying the potential of the first conversion signal.

7. The AC-DC converter as claimed in claim 1 or any of the claims 2 to 6, wherein the first conversion circuit is a synchronous current double rectifier having a first switch unit and a second switch unit, wherein the control module first controls the first switch unit or the second switch unit to be turned on for amplifying the potential of the first conversion signal.

8. The AC-DC converter as claimed in claim 7, wherein the power storage unit further comprises a first inductor and a second inductor for respectively electrically connecting to the first switch unit and the second switch unit.

9. The AC-DC converter as claimed in claim 1 or any of the claims 2 to 8, wherein the first conversion circuit is a full wave bridge rectifier having a first switch unit, a second switch unit, a third switch unit, and a fourth switch unit, wherein the control module first controls the first switch unit and the second switch unit to be turned on at the same time, or controls the third switch unit and the fourth switch unit to be turned on at the same time so as to amplify the potential of the first conversion signal.

10. The AC-DC converter as claimed in claim 1 or any of the claims 2 to 9, wherein the second signal terminal is used for electrically connecting to a battery apparatus.

11. The AC-DC converter as claimed in claim 1 or any of the claims 2 to 10, wherein the first conversion circuit has a power factor collection (PFC) function.

12. A charging and discharging system, comprising: an AC-DC converter, comprising:
a first signal terminal for inputting a first power signal;
a power storage unit electrically connected to the first signal terminal for amplifying a potential of the first power signal into a first conversion signal;
a first conversion circuit electrically connected to the power storage unit;
control module electrically connected to the first conversion circuit, wherein the control module controls the first conversion circuit to use the power storage unit for amplifying the potential of the first power signal into the first conversion signal and then transfers it into a second conversion signal;
a second conversion circuit electrically connected to the first conversion circuit via a transformer for converting the second conversion signal into a DC power signal; and
a second signal terminal electrically connected to the second conversion circuit for outputting the DC power signal; and
a battery apparatus electrically connected to the second signal terminal for receiving the DC power signal.

13. The charging and discharging system as claimed in claim 12, wherein the AC-DC converter further comprises an AC signal conversion circuit electrically connected between the first signal terminal and the power storage unit, wherein the first power signal is an AC signal, and the AC signal conversion circuit is used for converting the AC signal into a DC signal.

14. The AC-DC converter as claimed in claim 13, wherein the first power signal is a single phase AC signal or a three-phase AC signal.

15. The charging and discharging system as claimed in claim 12, 13 or 14, wherein the battery apparatus is further used for transmitting the DC power signal to the AC-DC converter, and the control module is used for further controlling the second conversion circuit and the first conversion circuit for converting the DC power signal into the first power signal so as to be output from the first signal terminal.

16. The charging and discharging system as claimed in claims 12 to 15, wherein the AC-DC converter is further electrically connected to a switch module.

17. The charging and discharging system as claimed in claim 12 or any of the claims 13 to 16, wherein the first conversion circuit comprises:
a synchronous rectifier having a first switch unit and a second switch unit; and
an auxiliary switch unit respectively electrically connected to the first switch unit and the second switch unit, wherein the control module first controls the auxiliary switch unit to be turned on to amplify the potential of the first conversion signal.

18. The charging and discharging system as claimed in claim 12 or any of the claims 13 to 17, wherein the first conversion circuit is a synchronous current double rectifier having a first switch unit and second switch unit, wherein the control module first respectively controls the first switch unit or the second switch unit to be turned on so as to amplify the potential of the first conversion signal.

19. The charging and discharging system as claimed in claim 18, wherein the power storage unit further comprises a first inductor and a second inductor for respectively electrically connecting to the first switch unit and the second switch unit.

20. The charging and discharging system as claimed in claim 12 or any of the claims 13 to 19, wherein the first conversion circuit is a full wave bridge rectifier having a first switch unit, a second switch unit, a third switch unit, and a fourth switch unit, wherein the control module first controls the first switch unit and the second switch unit to be turned on at the same time or controls the third switch unit and the fourth switch unit to be turned on at the same time to amplify the potential of the first conversion signal.

21. The charging and discharging system as claimed in claim 12 or any of the claims 13 to 20, wherein the first conversion circuit has a power factor collection (PFC) function.
